# EUROPÄISCHE PATENTSCHRIFT

(11) **EP 2 557 323 B1**
(45) Veröffentlichungstag und Bekanntmachung des Hinweises auf die Patenterteilung: **08.04.2015**
(21) Anmeldenummer: 12178769.1
(22) Anmeldetag: 01.08.2012
(51) Int. Cl.: F16C 19/30, F16C 19/54, F16C 25/08, F16C 23/08

(54) **Axialpendelrollenlageranordnung, insbesondere für eine Schiffantriebswelle**
Axial floating bearing assembly, in particular for a ship drive shaft
Agencement de palier à roulement à rotule axiale, notamment pour un arbre d'entraînement de bateau

(30) Priorität: 09.08.2011 DE 102011080651
(43) Veröffentlichungstag der Anmeldung: 13.02.2013
(73) Patentinhaber: Schaeffler Technologies AG & Co. KG, 91074 Herzogenaurach (DE)
(72) Erfinder: Breetzmann, Philipp, 91058 Erlangen (DE); Beresch, Eduard, 97529 Sulzheim (DE); Neumann, Dimitri, 91448 Emskirchen (DE)

(56) Entgegenhaltungen:
- US-A- 3 737 109
- US-A- 5 433 536
- US-A- 6 082 907

## Beschreibung

### Gebiet der Erfindung

Die Erfindung bezieht sich auf eine Axialpendelrollenlageranordnung, insbesondere für Schwerlastanwendungen wie z.B. zur Lagerung einer Schiffantriebswelle, oder eines Großbohrwerkkopfes, wobei diese Axialpendelrollenlageranordnung einen ersten Lageraußenring, einen zweiten Lageraußenring, einen ersten Lagerinnenring, einen zweiten Lagerinnenring sowie ballig asymmetrisch ausgebildete Wälzkörper umfasst, die unter Bildung einer ersten Wälzkörperlaufreihe, sowie unter Bildung einer zweiten Wälzkörperlaufreihe in einem zwischen dem jeweiligen Lageraußenring und dem zugeordneten Lagerinnenring definierten Ringraum aufgenommen und hierbei zur Lagerachse angestellt angeordnet sind.

Aus US 6,082,907 A ist eine Axialpendelrollenlageranordnung der eingangs genannten Art bekannt. Bei dieser bekannten Lageranordnung sind die beiden Lageraußenringe jeweils über einen axial verlagerbaren Sitzring axial abgestützt. Der jeweilige Sitzring ist gegenüber einer Ringstufe axial verlagerbar.

Derartige Axialpendelrollenlageranordnungen können insbesondere durch zwei in sog. O-Anordnung zusammengesetzte Axialpendelrollenlager gebildet werden. Die so geschaffene Lageranordnung zeichnet sich durch eine hohe axiale Tragfähigkeit aus und lässt bei Schwerlastsystemen typische Winkel- und Fluchtungsfehler beim Umlauf der gelagerten Welle in ausreichendem Maße zu.

Insbesondere bei schweren Ausführungen derartiger Lageranordnungen besteht das Problem, dass bei Reduktion der axialen Lagerlast, sowie insbesondere bei axialer Lagerluft die Wälzkörper mit Schlupf abwälzen. Hierdurch wird die Lebensdauer der Lageranordnung verkürzt.

### Aufgabe der Erfindung

Der Erfindung liegt die Aufgabe zugrunde, eine Axialpendelrollenlageranordnung, insbesondere für eine Schiffantriebswelle zu schaffen, bei welcher etwaiger beim Abwälzen der Wälzkörper auftretender Schlupf reduziert werden kann.

### Erfindungsgemäße Lösung

Diese Aufgabe wird erfindungsgemäß durch eine Axialpendelrollenlageranordnung mit den in Patentanspruch 1 angegebenen Merkmalen gelöst.

Dadurch wird es auf vorteilhafte Weise möglich, bei einer derartigen, große axial gerichtete Kräfte tragenden Lageranordnung eine auf den jeweiligen Betriebszustand optimal abgestimmte axiale Vorspannung der Wälzkörper sicherzustellen.

Unter *ballig-konoide Wälzkörper* sind im Kontext der vorliegenden Beschreibung Wälzkörper zu verstehen, welche eine im Axialschnitt ballige, insbesondere in der Art eines Kreislinienabschnitts gekrümmte Mantelfläche aufweisen und dabei derart kegelartig ausgebildet sind, dass der jeweilige Wälzkörper einen Axialendbereich mit einem kleinen Durchmesser und einen Axialendbereich mit größerem Durchmesser aufweist. Diese Wälzkörper werden durch die Laufringe derart geführt, dass die Wälzkörperachsen auf einer Kegelfläche um die Lagerachse umlaufen und die Wälzkörper dabei derart orientiert sind, dass diese mit ihrem hinsichtlich des Durchmessers kleineren Axialendbereich der Lagerachse zugewandt sind.

Erfindungsgemäß ist die Lageranordnung derart aufgebaut, dass sich die Spanneinrichtung axial zwischen den Lageraußenringen befindet. Die Spanneinrichtung ist hierbei vorzugsweise derart ausgebildet, dass die durch diese aufgebrachte axiale Spannkraft einstellbar ist. Hierzu kann die Spanneinrichtung im Zusammenspiel mit einer Hydraulikzylindereinrichtung gebildet werden, wobei diese Hydraulikzylindereinrichtung hierbei als Ringzylinder ausgebildet ist. Dieser Ringzylinder kann in vorteilhafter Weise so aufgebaut sein, dass dieser eine Ringkammer umfasst in welche ein Ringkolben axial verschiebbar eingesetzt ist, so dass die Ringkammer nach Maßgabe des darin herrschenden Fluiddruckes in axialer Richtung erweiterbar ist.

Der Ringzylinder kann als eigenständige Baugruppe gefertigt werden die bei Montage der Lageranordnung zwischen die Lageraußenringe eingefügt wird. Es ist auch möglich, den Ringzylinder im Zusammenspiel mit Strukturen der Außenringe zu realisieren, so dass letztlich Wandungen der axial erweiterbaren Kammer durch Abschnitte der Lageraußenringe gebildet werden.

Vorzugsweise ist eine Regeleinrichtung vorgesehen, durch welche der in der Hydraulikzylindereinrichtung herrschende Öldruck nach Maßgabe des momentanen Betriebszustandes, insbesondere Axiallastzustandes eingestellt wird. Durch das Regelsystem kann der auf den Hydraulikringkolben wirkende Öldruck erfasst und reguliert werden, so dass zum Zeitpunkt eines auftretenden Lastfalles eine hierbei vorteilhafte Vorspannung im Lager herrscht. Mit dieser Vorspannung können Schädigungen durch Schlupf vermieden werden.

Es ist in vorteilhafter Weise weiterhin möglich, in die Lageranordnung eine Federeinrichtung einzubinden, zur Aufbringung einer der Stellkraft der Spanneinrichtung entgegen gerichteten Rückstellkraft. Diese Federeinrichtung kann beispielsweise als Teller- oder Wellenfeder ausgeführt sein.

### Kurzbeschreibung der Figuren

Weitere Einzelheiten und Merkmale der Erfindung ergeben sich aus der nachfolgenden Beschreibung in Verbindung mit der Zeichnung. Es zeigt:

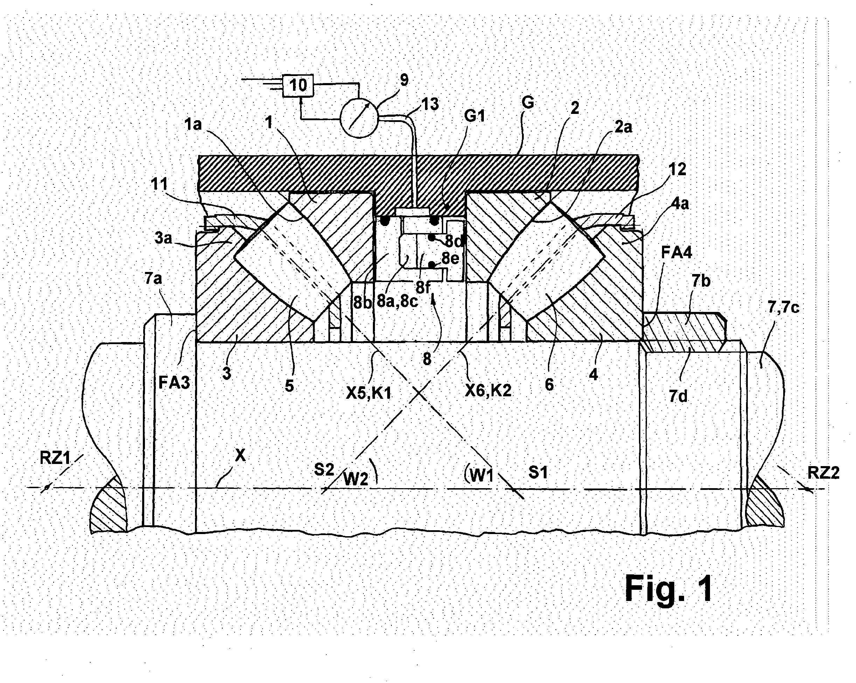

- **Figur 1**: eine vereinfachte Axialschnittdarstellung zur Veranschaulichung des Aufbaus einer erfindungsgemäßen Axialpendelrollenlageranordnung.

### Ausführliche Beschreibung der Figur

In Figur 1 ist eine erfindungsgemäße Axialpendelrollenlageranordnung dargestellt. Diese umfasst einen ersten Lageraußenring 1, einen zweiten Lageraußenring 2, einen ersten Lagerinnenring 3 und einen zweiten Lagerinnenring 4.

In dem zwischen dem ersten Lageraußenring 1 und dem ersten Lagerinnenring 3 gebildeten ersten Wälzkörperumlaufraum, sowie in dem zwischen dem zweiten Lageraußenring 2 und dem zweiten Lagerinnenring 4 gebildeten zweiten Wälzkörperumlaufraum sind ballig-konoidisch ausgebildete Wälzkörper 5, 6 aufgenommen die in diesen Wälzkörperumlaufräumen eine erste Wälzkörperlaufreihe, sowie eine zweite Wälzkörperlaufreihe bilden.

Der erste Lagerinnenring 3 und der zweite Lagerinnenring 4 sind über die durch diese Lagerringe gelagerte Wellenstruktur 7 miteinander axial gekoppelt. Hierzu ist an der Wellenstruktur eine Stützschulter 7a ausgebildet an welcher der erste Lagerinnenring 3 ansteht. Weiterhin sitzt auf der Wellenstruktur eine Stützmutter 7b die hier mit der Welle 7c über einen Gewindeabschnitt 7d in Eingriff steht.

Die Lageringe 1, 2, 3, 4 und die Wälzkörper 5, 6 sind so gestaltet und angeordnet, dass die Wälzkörperachsen X5 der Wälzkörper 5 der ersten Wälzkörperlaufreihe, sowie die Wälzkörperachsen X6 der Wälzkörper 6 der zweiten Wälzkörperlaufreihe auf einem ersten bzw. einem zweiten Kegelmantel K1, K2 umlaufen und die Spitzen S1, S2 der jeweiligen Kegelmäntel K1, K2 in einem Zwischenbereich zwischen den äußeren axialen Stirnseiten FA3, FA4 der Lagerinnenringe 3, 4 liegen.

Die hier gezeigte Lageranordnung zeichnet sich dadurch aus, dass in einem zwischen den Lageraußenringen 1, 2 liegenden Axialbereich eine Spanneinrichtung 8 vorgesehen ist, zum axialen Spannen der Lageraußenringe 1, 2 gegen die Wälzkörper 5, 6 und weiter gegen die Lagerinnenringe 3 4 der ersten und der zweiten Wälzkörperlaufreihe in einstellbar veränderbarer Weise.

Die Spanneinrichtung 8 ist derart ausgebildet, dass die durch diese aufgebrachte axiale Spannkraft einstellbar ist. Die Spanneinrichtung 8 ist hierzu als Ringzylinder ausgebildet welcher eine Ringkammer 8a umfasst die nach Maßgabe des darin herrschenden Fluiddruckes in axialer Richtung erweiterbar ist.

Die Druckbeaufschlagung der Ringkammer 8a erfolgt über eine Druckölquelle 9 die über eine Regeleinrichtung 10 angesteuert wird, zur Regelung der durch die Spanneinrichtung 8 aufgebrachten Axialkraft nach Maßgabe des momentanen Lastzustandes.

Die Ringkammer 8a wird durch einen Ringzylinder 8b und einen Ringkolben 8f gebildet. der Ringkolben 8f ist in eine Ringnut 8c eingesetzt und in dieser abdichtend geführt. Die Abdichtung wird hier durch O-Ringe 8d, 8e bewerkstelligt. Die Spanneinrichtung 8 ist axial schwimmend zwischen den Lageraußenringen 1, 2 angeordnet und sitzt über ihre Außenumfangsfläche abgedichtet in einer Ringstufe G1 eines Lagergehäuses G .

Die Regeleinrichtung 10 ist mit mehreren Sensorsystemen gekoppelt über welche hinsichtlich des momentanen Betriebszustandes indikative Signale erfasst werden können.

An den Lagerinnenringen 3, 4 sind Ringschultern 3a, 4a ausgebildet, durch welche die Wälzkörper 5, 6 geführt werden. Die Wälzkörper 5, 6 werden zudem jeweils durch eine Käfigeinrichtung 11, 12 geführt. Die jeweilige Käfigeinrichtung 11, 12 ist z.B. als Fensterkäfig oder Kammkäfig ausgeführt und am jeweiligen Lagerinnenring 3, 4 in radialer Richtung angestützt.

Die Lageraußenringe 1, 2 bilden jeweils Laufbahnen 1a, 2a die in dem hier gezeigten Axialschnitt konkav gekrümmt sind. Die Krümmung ist gleichmäßig. Die Krümmungszentren RZ1, RZ2 liegen auf der Lagerachse X. Die Anstellwinkel W1, W2 der Wälzkörperachsen liegen vorzugsweise im Bereich von 30° bis 75°, insbesondere bei ca. 45°. Bei der hier gezeigten Auslegung bietet die Lageranordnung sowohl in axialer als auch in radialer Richtung hohe Stützkräfte.

Beim Zusammenbau der Lageranordnung kann über die Stützmutter eine geforderte Kalt-Mindestvorspannung, oder Kalt-Lagerluft eingestellt werden. Die Lageraußenringe 1, 2 stützen sich dabei axial in dem Gehäuse G, insbesondere der Ringstufe G1 ab. Bei Eintreten eines entsprechenden Lastfalles wird der Öldruck in der Leitung 13 erhöht und damit der Ringkolben 8f gegenüber dem Ringzylinder 8b axial verlagert. Der Ringzylinder 8b stützt sich dabei an dem ersten Lageraußenring 1 ab und die Stirnfläche des Ringkolbens 8f stützt sich an der inneren Stirnfläche des zweiten Lageraußenringes 2 ab. Da die beiden Lagerinnenringe 3, 4 auf der Welle 7 axial abgestützt sind, wird nach Maßgabe der durch die Spanneinrichtung 8 aufgebrachten Axialkraft die Axialspannung auf die Wälzkörper 5, 6 erhöht. Hierdurch wird sichergestellt, dass die Wälzkörper 5, 6 auf den Lagerringen 1,2,3,4 weitgehend schlupffrei abwälzen.

## Patentansprüche

1. Axialpendelrollenlageranordnung, mit:
- einem ersten Lageraußenring (1),
- einem zweiten Lageraußenring (2),
- einem ersten Lagerinnenring (3),
- einem zweiten Lagerinnenring (4), sowie
- ballig-konoidisch ausgebildeten Wälzkörpem (5, 6) die unter Bildung einer ersten Wälzkörperlaufreihe, sowie unter Bildung einer zweiten Wälzkörperlaufreihe in einem zwischen dem jeweiligen Lageraußenring (1, 2) und dem zugeordneten Lagerinnenring (3, 4) definierten Ringraum aufgenommen sind,
wobei
- der erste Lagerinnenring (3) und der zweite Lagerinnenring (4) miteinander axial gekoppelt sind,
- die Wälzkörperachsen (X5) der Wälzkörper (5) der ersten Wälzkörperlaufreihe, sowie die Wälzkörperachsen (X6) der Wälzkörper (6) der zweiten Wälzkörperlaufreihe auf einem ersten bzw. einem zweiten Kegelmantel (K1, K2) umlaufen
- die Spitzen (S1, S2) der jeweiligen Kegelmäntel (K1, K2) in einem Zwischenbereich zwischen den äußeren axialen Stirnseiten (FA3, FA4) der Lagerinnenringe (3, 4) liegen,
- die Lageraußenringe (1, 2) jeweils Laufbahnen (1a, 2a) bilden, die in einem die Lagerachse enthaltenden Axialschnitt gleichmäßig konkav gekrümmt sind, wobei die Krümmungszentren (RZ1, RZ2) auf der Lagerachse (X) liegen,
- eine Spanneinrichtung (8) vorgesehen ist, zum axialen Spannen der Lageraußenringe (1, 2) gegen die Wälzkörper (5, 6) der ersten und der zweiten Wälzkörperlaufreihe
- die anneinrichtun (8) hierzu als Ringzylinder ausgebildet ist, welcher eine Ringkammer (8a) umfasst, die nach Maßgabe des darin herrschenden Fluiddruckes in axialer Richtung erweiterbar ist, und
- die Spanneinrichtung (8) axial schwimmend zwischen den Lageraußenringen (1, 2) angeordnet ist und über ihre Außenumfangsfläche abgedichtet in einer Ringstufe (G1) eines Lagergehäuses (G) sitzt, und
- die Lageraußenringe (1, 2) sich axial in dem Gehäuse (g) an der Ringstufe (G1) abstützen.

2. Axialpendelrollenlageranordnung nach Anspruch 1, **dadurch gekennzeichnet, dass** die Spanneinrichtung (8) derart ausgebildet ist, dass die durch diese aufgebrachte axiale Spannkraft einstellbar ist.

3. Axialpendelrollenlageranordnung nach wenigstens einem der Ansprüche 1 oder 2, **dadurch gekennzeichnet, dass** eine Regeleinrichtung (10) vorgesehen ist, zur Regelung der durch die Spanneinrichtung (8) aufgebrachten Axialkraft.

4. Axialpendelrollenlageranordnung nach wenigstens einem der Ansprüche 1 bis 3, **dadurch gekennzeichnet, dass** eine Federeinrichtung vorgesehen ist, zur Aufbringung einer der Stellkraft der Spanneinrichtung entgegen gerichteten Rückstellkraft.

5. Axialpendelrollenlageranordnung nach wenigstens einem der Ansprüche 1 bis 4, **dadurch gekennzeichnet, dass** die Anstellwinkel (W1, W2) der Wälzkörperachsen (X5, X6) im Bereich von 30° bis 75°, insbesondere bei ca. 45° liegen.

## Claims

1. Axial floating bearing assembly, with:
- a first bearing outer ring (1),
- a second bearing outer ring (2),
- a first bearing inner ring (3),
- a second bearing inner ring (4), and
- rolling bodies (5, 6) of crown-conoidal form, which, to form a first rolling-body running row and to form a second rolling-body running row, are accommodated in an annular space defined between the respective bearing outer ring (1, 2) and the assigned bearing inner ring (3, 4),
- the first bearing inner ring (3) and the second bearing inner ring (4) being coupled axially to one another,
- the rolling-body axes (X5) of the rolling bodies (5) of the first rolling-body running row and the rolling-body axes (X6) of the rolling bodies (6) of the second rolling-body running row revolving respectively on a first and on a second cone envelope (K1, K2),
- the apices (S1, S2) of the respective cone envelopes (K1, K2) lying in an intermediate region between the outer axial end faces (FA3, FA4) of the bearing inner rings (3, 4),
- the bearing outer rings (1, 2) forming in each case raceways (1a, 2a) which are concavely curved uniformly in an axial section containing the bearing axis, the centres of curvature (RZ1, RZ2) lying on the bearing axis (X),
- a tension device (8) being provided for the axial tensioning of the bearing outer rings (1, 2) against the rolling bodies (5, 6) of the first and of the second rolling-body running row,
- the tension device (8) being designed for this purpose as an annular cylinder which comprises an annular chamber (8a) which can be widened in the axial direction according to the fluid pressure prevailing therein, and
- the tension device (8) being arranged in an axially floating manner between the bearing outer rings (1, 2) and, sealed off over its outer circumferential surface, being seated in an annular step (G1) of a bearing housing (G), and
- the bearing outer rings (1, 2) being supported axially in the housing (G) on the annular step (G1).

2. Axial floating bearing assembly according to Claim 1, **characterized in that** the tension device (8) is designed in such a way that the axial tension force applied by it is adjustable.

3. Axial floating bearing assembly according to at least one of Claims 1 and 2, **characterized in that** a regulating device (10) is provided for regulating the axial force applied by the tension device (8).

4. Axial floating bearing assembly according to at least one of Claims 1 to 3, **characterized in that** a spring device is provided for applying a restoring force directed opposite to the actuating force of the tension device.

5. Axial floating bearing assembly according to at least one of Claims 1 to 4, **characterized in that** the pitch angles (W1, W2) of the rolling-body axes (X5, X6) lie in the range of 30° to 75°, in particular around 45°.

## Revendications

1. Agencement de palier à roulement à rotule axiale, comprenant :
- une première bague extérieure de palier (1),
- une deuxième bague extérieure de palier (2),
- une première bague intérieure de palier (3),
- une deuxième bague intérieure de palier (4), ainsi que
- des corps de roulement (5, 6) réalisés sous forme bombée-conoïde qui sont reçus dans un espace annulaire défini entre la bague extérieure de palier (1, 2) respective et la bague intérieure de palier (3, 4) associée, en formant une première rangée mobile de corps de roulement, ainsi qu'en formant une deuxième rangée mobile de corps de roulement,
dans lequel
- la première bague intérieure de palier (3) et la deuxième bague intérieure de palier (4) sont accouplées axialement l'une à l'autre,
- les axes de corps de roulement (X5) des corps de roulement (5) de la première rangée mobile de corps de roulement, ainsi que les axes de corps de roulement (X6) des corps de roulement (6) de la deuxième rangée mobile de corps de roulement circulent sur une première ou une deuxième enveloppe conique (K1, K2),
- les sommets (S1, S2) des enveloppes coniques (K1, K2) respectives se situent dans une région intermédiaire entre les côtés frontaux axiaux extérieurs (FA3, FA4) des bagues intérieures de palier (3, 4),
- les bagues extérieures de palier (1, 2) forment respectivement des chemins de roulement (1a, 2a) qui sont courbés de manière concave régulièrement dans une coupe axiale contenant l'axe de palier, les centres de courbure (RZ1, RZ2) se situant sur l'axe de palier (X),
- un dispositif de serrage (8) est prévu, pour le serrage axial des bagues extérieures de palier (1, 2) contre les corps de roulement (5, 6) de la première et de la deuxième rangée mobile de corps de roulement,
- le dispositif de serrage (8) est à cet effet réalisé sous forme de cylindre annulaire, lequel comporte une chambre annulaire (8a) qui peut être élargie dans la direction axiale conformément à la pression de fluide régnant dans celle-ci, et
- le dispositif de serrage (8) est disposé de manière axialement flottante entre les bagues extérieures de palier (1, 2) et repose, par le biais de sa surface périphérique extérieure, de manière étanche dans un gradin annulaire (G1) d'un boîtier de palier (G), et
- les bagues extérieures de palier (1, 2) s'appuient axialement contre le gradin annulaire (G1) dans le boîtier (G).

2. Agencement de palier à roulement à rotule axiale selon la revendication 1, **caractérisé en ce que** le dispositif de serrage (8) est réalisé de telle sorte que la force de serrage axiale appliquée par celui-ci soit ajustable.

3. Agencement de palier à roulement à rotule axiale selon au moins l'une quelconque des revendications 1 et 2, **caractérisé en ce qu'**un dispositif de réglage (10) est prévu, pour le réglage de la force axiale appliquée par le dispositif de serrage (8).

4. Agencement de palier à roulement à rotule axiale selon au moins l'une quelconque des revendications 1 à 3, **caractérisé en ce qu'**un dispositif de ressort est prévu, pour l'application d'une force de rappel orientée en sens inverse à la force de réglage du dispositif de serrage.

5. Agencement de palier à roulement à rotule axiale selon au moins l'une quelconque des revendications 1 à 4, **caractérisé en ce que** les angles d'inclinaison (W1, W2) des axes de corps de roulement (X5, X6) se situent dans la plage de 30° à 75°, en particulier environ à 45°.
